# EUROPEAN PATENT SPECIFICATION

(11) **EP 3 934 491 B1**
(45) Date of publication and mention of the grant of the patent: **07.12.2022**
(21) Application number: 20707329.7
(22) Date of filing: 27.02.2020
(51) Int. Cl.: A47J 31/30

(54) **FUNNEL-SHAPED FILTER FOR MOKA COFFEE MAKER**
TRICHTERFÖRMIGER FILTER FÜR EINE MOKKA-KAFFEEMASCHINE
FILTRE EN FORME D'ENTONNOIR POUR MACHINE À CAFÉ MOKA

(30) Priority: 07.03.2019 IT 201900003309
(43) Date of publication of application: 12.01.2022
(73) Proprietor: Minutolo, Francesco, 6850 Mendrisio (CH)
(72) Inventor: Minutolo, Francesco, 6850 Mendrisio (CH)
(74) Representative: Fabiano, Piero
(86) International application number: PCT/IB2020/051668
(87) International publication number: WO 2020/178673

(56) References cited:
- EP-A1- 1 557 119
- FR-A1- 2 132 005
- IT-B- 443 477

## Description

### Field of the invention

The present invention concerns the field of coffee makers, in particular the field of coffee makers known under the name of "moka" and even more particularly a funnel-shaped filter for moka coffee maker.

### Known art

As known, the moka coffee maker is a device intended for preparing coffee designed by Alfonso Bialetti in 1933. The body is made in aluminum and substantially comprises five parts that are mounted interlockingly with one another:
- the boiler, provided with a safety valve that leaves a gas and liquid vent whenever the pressure rises too much and the water is not able to flow out;
- the coffee tank, in the shape of a funnel with a filtering plane (for this also named "funnel-shaped filter"), where the roasted coffee powder is placed; the coffee tank is housed interlockingly inside the boiler;
- the filter (also named "filter plate"), which holds the coffee powder and prevents it from staying suspended in the final beverage;
- the rubber gasket, which restrains the plate in position and prevents the water and steam from outflowing on the side, at the base of the coffee tank or funnel-shaped filter;
- the coffee pot, which collects the beverage itself and which is screw closed onto the water tank.

To prepare the coffee, the water is poured inside the boiler, the latter is closed by the funnel-shaped filter, which is filled with coffee power, and in turn closed by the coffee pot. Everything is then placed on a stove.

When heating, the water makes the pressure inside the boiler increase and raises upwards, by first passing inside the funnel-shaped filter and then inside the filter of the plate (which, having much smaller and denser holes than the funnel-shaped filter, prevents the coffee grains from passing inside the coffee pot). It comes out through a spout into the upper container. Once the upper container is filled, the beverage is ready for tasting.

The Applicant has observed that the moka coffee maker has substantially stayed identical since its conception, probably thanks to its constructive simplicity and to the efficiency in preparing coffee.

A funnel-shaped filter for moka coffee maker is known from FR-A-2132005.

The Applicant has observed that the main problem of the moka coffee maker lies in its cleaning, at the end of the coffee preparing process. In fact, at the end of the coffee preparation, the parts constituting it must be taken apart and cleaned. In particular, the funnel-shaped filter is generally shaken when being cleaned and, at times, beaten against the wall of the sink or of a container for the garbage. This in an attempt to remove the roasted coffee powder, which has been compacted inside the filter itself due to the beverage preparation process. Whenever the beating operation does not generate the desired effect, the user must manually remove the used roasted coffee powder stuck inside the load compartment.

The Applicant has thus encountered the need to provide a new type of coffee maker of the moka type that can be cleaned easily, without contemporaneously modifying its constructive simplicity in a significant way.

In particular, the Applicant has addressed the problem of providing a new type of coffee maker of the moka type provided with a funnel-shaped filter that allows to remove the roasted coffee powder more easily at the end of the coffee preparation.

### Summary of the Invention

Thus, in its first aspect, the invention concerns a funnel-shaped filter for moka coffee maker comprising a cylindrical body provided with a bottom wall, a cannula linked to said bottom wall for the inflow of pressurized water into the cylindrical body and a filter characterized in that said filter is translatable inside the cylindrical body between at least one working position in which the filter is near the bottom wall and defines, with the cylindrical body, a loading compartment for the coffee powder and an unloading position in which it is apart from the bottom wall, pushing the coffee powder outside of the cylindrical body.

In the aforesaid aspect, the present invention can have at least one of the preferred characteristics described here below.

Advantageously, the filtering element comprises a disc-shaped element provided with a plurality of holes and a supporting stem extending from said disc-shaped element inside the cannula.

Preferably, the supporting stem has an extent dimension inside the cannula greater than an extent dimension of the cannula, so that to jut out with respect to said cannula.

Conveniently, the supporting stem has at least one end jutting out from the cannula, the jutting out end comprises a resting surface for a user.

Advantageously, the supporting stem is configured so that to allow the passage of pressurized water inside the cannula.

Conveniently, the supporting stem comprises at least one bulkhead shaped to make at least one passage channel inside the cannula.

Preferably, the funnel-shaped filter comprises at least one outer jacket arranged outside the cannula. The outer jacket defining, together with the supporting stem and the cannula, a duct for the passage of water in the loading compartment.

Conveniently, the funnel-shaped filter comprises at least one elastic element adapted to exert a return force on the supporting stem to bring back the filter element from the unloading position to the working position.

Preferably, the elastic element comprises a helical spring interposed between the outer jacket and the bottom wall.

Further characteristics and advantages of the invention will become clearer in the detailed description of some preferred, but not exclusive, embodiments of a funnel-shaped filter for moka coffee makers.

### Brief description of the drawings

Such description will be set forth hereunder with reference to the accompanying drawings, only provided by way of example and thus not limiting, in which:

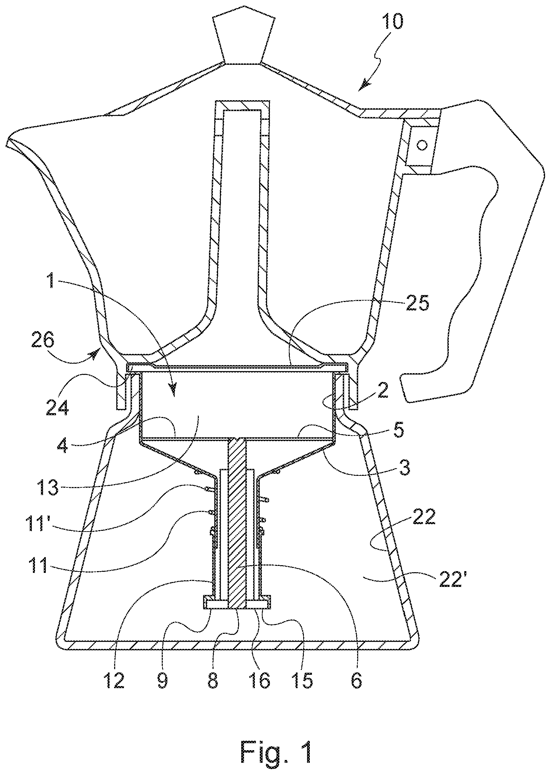

- figure 1 shows a schematic sectional side view of a moka coffee maker according to the present invention;

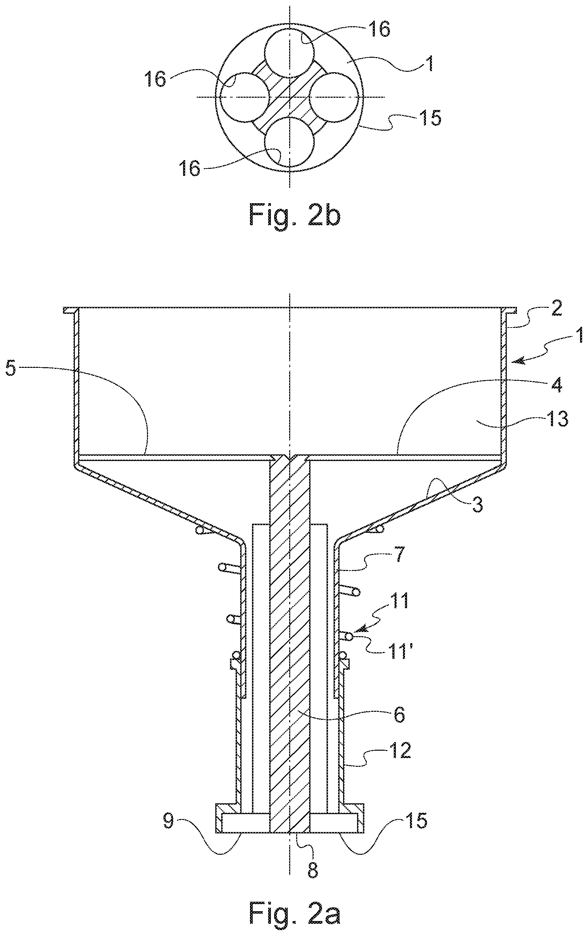

- figure 2a shows an enlarged schematic side view of the funnel-shaped filter of the coffee maker of figure 1;
- figure 2b shows an enlarged schematic sectional view of the cannula of the funnel-shaped filter of figure 2a;
- figure 3a is sectional side view of the funnel-shaped filter with the filtering element in the unloading position; and
- figure 3b is a sectional side view of the funnel-shaped filter with the filtering element in the working position.

### Detailed description of embodiments of the invention

With reference to the figures, a moka coffee maker according to the present invention is depicted by the numerical reference 10.

The moka coffee maker 10 substantially comprises a body made of aluminum provided with five parts that are mounted interlockingly with one another: the boiler 22, the coffee tank or funnel-shaped filter 1, the rubber gasket 24, the filter plate 25 and the coffee pot 26.

The boiler 22, generally truncated cone shaped, makes a cavity 22' for accommodating the water and can be provided with a safety valve, not shown in the figures, which leaves a vent for gases and liquids whenever the pressure inside the boiler itself 22 rises too much and the water is not able to flow out.

The coffee tank is substantially funnel shaped and, for this reason, is typically named "funnel-shaped filter" 1. The funnel-shaped filter 1 is the element in which to put the roasted coffee powder. The funnel-shaped filter 1 is at least partially housed interlockingly inside the boiler 22.

The filter plate 25 is configured to hold the coffee power and to prevent it from staying suspended in the final beverage. The filter plate 25 is like a disc-shaped element provided with a plurality of holes, not shown in the figures, adapted to allow the passage of the infused beverage but to prevent the coffee powder from arriving inside the coffee pot 26.

In the embodiment shown, the rubber gasket 24 restrains the filter plate 25 in position and prevents the water and steam from outflowing on the side, at the base of the coffee tank or funnel-shaped filter.

The coffee pot 26 collects the beverage itself at the end of the extraction process and has a truncated cone shape upside down with respect to the boiler 22. The coffee pot 26 is screw closed on the boiler 22.

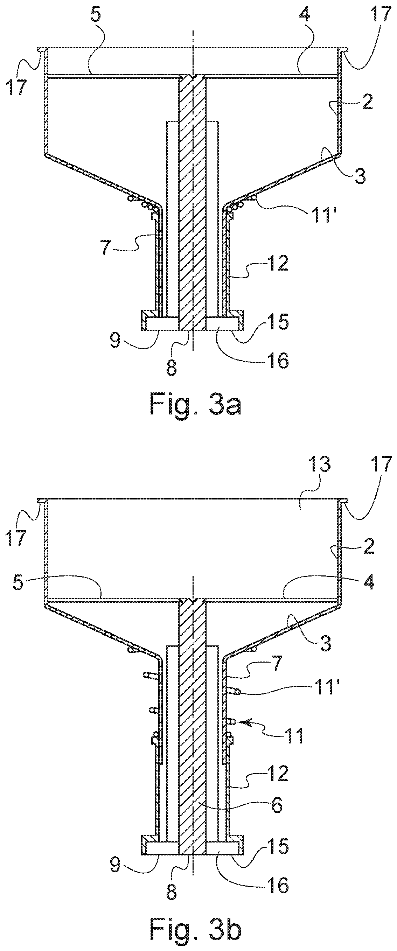

In the embodiment shown in the figures, the funnel-shaped filter 1 for moka coffee maker comprises a cylindrical body 2 provided with a bottom wall 3, a cannula 7 linked to the bottom wall 3 for the inflow of pressurized water into the cylindrical body 2 and a filtering element 4. The filtering element 4 is contained inside the cylindrical body 2 and is translatable inside the cylindrical body 2 between at least one working position (shown in figure 3b) in which the filtering element 4 is near the bottom wall 3 and defines, with the cylindrical body 2, a loading compartment 13 for the roasted coffee powder, and an unloading position (shown in figure 3a) in which the filtering element 4 is apart from the bottom wall 3 so that to push the roasted coffee powder, now used, outside of the cylindrical body 2.

In the embodiment shown in the figures, in the unloading position, the filtering element 4 is substantially aligned at the upper edge 17 of the cylindrical body 2.

The filtering element 4 is like a disc-shaped element provided with a plurality of holes, and a supporting stem 6 extending from the disc-shaped element into the cannula 7.

Preferably, the supporting stem 6 has an extent dimension inside the cannula 7, substantially in the vertical direction, greater than the extent dimension, in the vertical direction, of the cannula 7, so that to jut out, on the bottom, with respect to the cannula 7, at least in said working position shown in figure 3b.

The supporting stem 6 has at least one end jutting out, at the bottom, from the cannula 7, the jutting out end being provided with a small disc-shaped base 15 comprising a resting surface for one or more fingers of the user.

The disc-shaped base 15 has at least one through opening 16 for the passage of water, which, when pressurized, rises inside the cannula 7 to reach the loading compartment of the coffee powder. Preferably, the disc-shaped base 15 has at least four through openings 16 for the passage of water.

The supporting stem 6 is configured so that to allow the passage of pressurized water inside the cannula 7.

For this purpose, the supporting stem 6 comprises at least one bulkhead shaped to make at least one passage channel inside the cannula 7 for pressurized water, this way, the pressurized water crossing the cannula 7, by passing through the filtering element 4, reaches the inside of the cylindrical body where it will extract the beverage that will then be accommodated in the coffee pot above 26, when in contact with the roasted coffee powder.

In the embodiment shown in the figures, the funnel-shaped filter 1 comprises at least one outer jacket 12 arranged outside of and concentrically to the cannula 7. The outer jacket 12 has an elongated cylindrical shape and is mounted outside the cannula 7, so that to slide in a vertical direction with respect to the latter.

The outer jacket 12 has a smaller vertical extent dimension than the vertical extent dimension of the cannula 7. Preferably, the vertical extent dimension is greater than 2 cm, preferably greater than 3 cm, anyhow less than 7 cm.

The outer jacket 12 defines, together with the supporting stem 6 and the cannula 7, a duct for the passage of water in the loading compartment.

Preferably, the funnel-shaped filter 1 further comprises at least one elastic element 11 adapted to exert a return force on the supporting stem 6 to bring back the filtering element 4 from the unloading position (shown in figure 3a) to the working position (shown in figure 3b).

Preferably, the elastic element 11 comprises a helical spring 11' interposed between the outer jacket 12 and the bottom wall 3.

The helical spring 11' is arranged at one of its ends against the upper edge 19 of the outer jacket 12 and at the remaining end against the bottom wall 3.

In order to reduce the packaging dimensions in the vertical direction, the helical spring 11' is a tapered helical spring with the major base facing the bottom wall 3.

For the coffee preparation process, it is possible to exert a pressure on the resting base 15 to translate the filtering element 4 by extracting the funnel-shaped filter 1 from the boiler 22. In particular, a pressure on the resting base 15, exerted, for example, by a manual action of the user, urges the supporting element 6 to translate inside the cannula 7 and, consequently, the filtering element 4 to translate inside the cylindrical body 2, from the working position to the unloading position, where the now used coffee powder, no longer contained sideways by the walls of the cylindrical body 2, falls outside of the latter.

Several changes can be made to the embodiments described in detail, anyhow remaining within the protection scope of the invention, defined by the following claims.

## Claims

1. Funnel-shaped filter (10) for moka coffee maker comprising a cylindrical body (2) provided with a bottom wall (3), a cannula (7) linked to said bottom wall (3) for the inflow of pressurized water into the cylindrical body and a filtering element (4) said filtering element (4) being translatable inside the cylindrical body (2) between at least one working position in which said filtering element (4) is near said bottom wall (3) and defines, with said cylindrical body (2), a loading compartment (13) for the coffee powder and an unloading position in which it is apart from the bottom wall (3), pushing the coffee powder outside of said cylindrical body (2);
- said filtering element (4) comprises a disc-shaped element (5) provided with a plurality of holes and a supporting stem (6) extending from said disc-shaped element (5) inside said cannula (7); **characterized in that**
- said supporting stem (6) has, in said at least one working position, an extent dimension inside said cannula (7) greater than an extent dimension of said cannula (7), so that to jut out with respect to said cannula (7).

2. Funnel-shaped filter (1) according to claim 1, **characterized in that** said supporting stem (6) has at least one end (8) jutting out from said cannula (7), said jutting out end (8) comprising a resting surface (9), for a user, the resting surface (9) being provided with at least one opening (16).

3. Funnel-shaped filter (1) according to claim 1 or 2, **characterized in that** said supporting stem (6) is configured so that to allow the passage of pressurized water inside the cannula (7).

4. Funnel-shaped filter (1) according to any one of claims 1 to 3, **characterized in that** said supporting stem (6) comprises at least one bulkhead shaped to make at least one passage channel inside said cannula (7) for water.

5. Funnel-shaped filter (1) according to claim 1, **characterized by** comprising at least one outer jacket (12) arranged outside of said cannula (7); said outer jacket (12) defining, together with said supporting stem (6) and said cannula (7), a duct for the passage of water in said loading compartment (13).

6. Funnel-shaped filter (1) according to claim 1, **characterized by** comprising at least one elastic element (11) adapted to exert a return force on said supporting stem (6) to bring back said filter element (4) from said unloading position to said working position.

7. Funnel-shaped filter (1) according to claim 5, **characterized in that** said elastic element (11) comprises a helical spring (11') interposed between said outer jacket (12) and said bottom wall (3).

8. Coffee maker for preparing coffee, comprising a funnel-shaped filter (1) according to any one of claims 1 to 7.

## Patentansprüche

1. Trichterförmiger Filter (10) für eine Mokka-Kaffeemaschine, umfassend einen zylindrischen Körper (2), der eine Bodenwand (3), eine mit der Bodenwand (3) verbundene Kanüle (7) für das Einströmen von Druckwasser in den zylindrischen Körper und ein Filterelement (4) aufweist, wobei das Filterelement (4) innerhalb des zylindrischen Körpers (2) zwischen mindestens einer Arbeitsposition, in der sich das Filterelement (4) nahe der Bodenwand (3) befindet und mit dem zylindrischen Körper (2) einen Laderaum (13) für das Kaffeepulver definiert, und einer von der Bodenwand (3) entfernten Entladeposition verfahrbar ist, und dabei das Kaffeepulver aus dem zylindrischen Körper (2) herausdrückt;
- das Filterelement (4) ein mit einer Vielzahl von Löchern versehenes scheibenförmiges Element (5) und einen sich von dem scheibenförmigen Element (5) innerhalb der Kanüle (7) erstreckenden Stützschaft (6) umfasst; **dadurch gekennzeichnet, dass**
- der Stützschaft (6) in der mindestens einen Arbeitsposition innerhalb der Kanüle (7) eine Erstreckungsabmessung aufweist, die grösser als eine Erstreckungsabmessung der Kanüle (7) ist, so dass er gegenüber der Kanüle (7) vorspringt.

2. Trichterförmiger Filter (1) nach Anspruch 1, **dadurch gekennzeichnet, dass** der Stützschaft (6) mindestens ein Ende (8) aufweist, das aus der Kanüle (7) herausragt, wobei das herausragende Ende (8) eine Auflagefläche (9) für einen Benutzer umfasst, wobei die Auflagefläche (9) mit mindestens einer Öffnung (16) versehen ist.

3. Trichterförmiger Filter (1) nach Anspruch 1 oder 2, **dadurch gekennzeichnet, dass** der Stützschaft (6) derart eingerichtet ist, dass er den Durchgang von unter Druck stehendem Wasser innerhalb der Kanüle (7) ermöglicht.

4. Trichterförmiger Filter (1) nach einem der Ansprüche 1 bis 3, **dadurch gekennzeichnet, dass** der Stützschaft (6) mindestens eine Schottwand aufweist, die zur Bildung von mindestens einem Durchgangskanal innerhalb der Kanüle (7) für Wasser geformt ist.

5. Trichterförmiger Filter (1) nach Anspruch 1, **dadurch gekennzeichnet, dass** er mindestens einen außerhalb der Kanüle (7) angeordneten Außenmantel (12) umfasst, wobei der Außenmantel (12) zusammen mit dem Stützschaft (6) und der Kanüle (7) einen Kanal für den Durchgang von Wasser in den Laderaum (13) definiert.

6. Trichterförmiger Filter (1) nach Anspruch 1, **dadurch gekennzeichnet, dass** er mindestens ein elastisches Element (11) umfasst, das geeignet ist, eine Rückstellkraft auf den Stützschaft (6) auszuüben, um das Filterelement (4) von der Entladeposition in die Arbeitsposition zurückzubringen.

7. Trichterförmiger Filter (1) nach Anspruch 5, **dadurch gekennzeichnet, dass** das elastische Element (11) eine zwischen dem Außenmantel (12) und der Bodenwand (3) zwischengeschaltete Schraubenfeder (11') umfasst.

8. Kaffeemaschine für die Zubereitung von Kaffee, umfassend einen trichterförmigen Filter (1) nach einem der Ansprüche 1 bis 7.

## Revendications

1. Filtre en forme d'entonnoir (10) pour cafetière moka comprenant un corps cylindrique (2) pourvu d'une paroi de fond (3), d'une canule (7) reliée à ladite paroi de fond (3) pour l'afflux d'eau sous pression à l'intérieur du corps cylindrique et d'un élément filtrant (4), ledit élément filtrant (4) pouvant être translaté à l'intérieur du corps cylindrique (2) entre au moins une position de fonctionnement, dans laquelle ledit élément filtrant (4) est proche de ladite paroi de fond (3) et définit, avec ledit corps cylindrique (2), un compartiment de chargement (13) pour la poudre de café, et une position de déchargement, dans laquelle il est éloigné de la paroi de fond (3), poussant la poudre de café à l'extérieur dudit corps cylindrique (2);
- ledit élément filtrant (4) comprenant un élément en forme de disque (5) pourvu d'une pluralité de trous et d'une tige de support (6) s'étendant depuis ledit élément en forme de disque (5) a l'intérieur de ladite canule (7); **caractérisé en ce que**
- ladite tige de support (6) présente, dans au moins ladite position de fonctionnement, une dimension d'extension à l'intérieur de ladite canule (7) supérieure à une dimension d'extension de ladite canule (7), de sorte à faire saillie par rapport à ladite canule (7).

2. Filtre en forme d'entonnoir (1) selon la revendication 1, **caractérisé en ce que** ladite tige de support (6) présente au moins une extrémité (8) faisant saillie de ladite canule (7), ladite extrémité faisant saillie (8) comprenant une surface d'appui (9), pour un utilisateur, la surface d'appui (9) étant pourvue d'au moins une ouverture (16).

3. Filtre en forme d'entonnoir (1) selon la revendication 1 ou 2, **caractérisé en ce que** ladite tige de support (6) est configurée de sorte à permettre le passage d'eau sous pression à l'intérieur de la canule (7).

4. Filtre en forme d'entonnoir (1) selon l'une quelconque des revendications 1 à 3, **caractérisé en ce que** ladite tige de support (6) comprend au moins une cloison façonnée pour former au moins un canal de passage à l'intérieur de ladite canule (7) pour l'eau.

5. Filtre en forme d'entonnoir (1) selon la revendication 1, **caractérisé en ce qu'**il comprend au moins une gaine externe (12) disposée à l'extérieur de ladite canule (7); ladite gaine externe (12) définissant, avec ladite tige de support (6) et ladite canule (7), un conduit pour le passage de l'eau dans ledit compartiment de chargement (13).

6. Filtre en forme d'entonnoir (1) selon la revendication 1, **caractérisé en ce qu'**il comprend au moins un élément élastique (11) adapté pour exercer une force de rappel sur ladite tige de support (6) afin de ramener ledit élément filtrant (4) de ladite position de déchargement à ladite position de fonctionnement.

7. Filtre en forme d'entonnoir (1) selon la revendication 5, **caractérisé en ce que** ledit élément élastique (11) comprend un ressort hélicoïdal (11') interposé entre ladite gaine externe (12) et ladite paroi de fond (3).

8. Cafetière pour la préparation de café, comprenant un filtre en forme d'entonnoir (1) selon l'une quelconque des revendications 1 à 7.
